(19) **Europäisches Patentamt**
**European Patent Office**
**Office européen des brevets**

(11) **EP 4 526 649 B1**

(12) **EUROPÄISCHE PATENTSCHRIFT**

(45) Veröffentlichungstag und Bekanntmachung des Hinweises auf die Patenterteilung:
**24.06.2026 Patentblatt 2026/26**

(21) Anmeldenummer: **22729433.7**

(22) Anmeldetag: **20.05.2022**

(51) Internationale Patentklassifikation (IPC):
**G01N 17/00** *(2006.01)* **G01N 25/18** *(2006.01)*

(52) Gemeinsame Patentklassifikation (CPC):
**G01N 17/008; G01N 25/18**

(86) Internationale Anmeldenummer:
**PCT/DE2022/100388**

(87) Internationale Veröffentlichungsnummer:
**WO 2023/222147 (23.11.2023 Gazette 2023/47)**

(54) **DETEKTION VON ABLAGERUNGEN UND/ODER VERSCHMUTZUNGEN AUF EINER SENSOROBERFLÄCHE INNERHALB EINES GEFÄSSES ODER EINER LEITUNG MIT EINEM STRÖMENDEN MEDIUM**

DETECTION OF DEPOSITS AND/OR CONTAMINATION ON A SENSOR SURFACE WITHIN A VESSEL OR A LINE WITH A FLOWING MEDIUM

DÉTECTION DE DÉPÔTS ET/OU DE CONTAMINATION SUR UNE SURFACE DE CAPTEUR À L'INTÉRIEUR D'UN RÉCIPIENT OU D'UNE CONDUITE CONTENANT UN MILIEU EN ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.03.2025 Patentblatt 2025/13**

(73) Patentinhaber: **Seida, Frank**
**59368 Werne (DE)**

(72) Erfinder: **Seida, Frank**
**59368 Werne (DE)**

(74) Vertreter: **Kutzenberger Wolff & Partner**
**Waidmarkt 11**
**50676 Köln (DE)**

(56) Entgegenhaltungen:
**WO-A1-2014/099755 DE-A1- 19 517 770**
**US-A1- 2018 022 621**

**Beschreibung**

**Stand der Technik**

Die vorliegende Erfindung betrifft eine Detektionsvorrichtung zum Detektieren von Ablagerungen und/oder Verschmutzungen auf einer Sensoroberfläche innerhalb eines Gefäßes oder einer Leitung mit einem strömenden Medium. Ein weiterer Gegenstand der Erfindung ist eine Detektionsanordnung zur Detektion von Ablagerungen und/oder Verschmutzungen eines strömenden Mediums an einer Wandung eines Gefäßes oder einer Leitung mit einer derartigen Detektionsvorrichtung. Ferner betrifft die Erfindung ein Verfahren zum Detektieren von Ablagerungen und/oder Verschmutzungen auf einer Sensoroberfläche innerhalb eines Gefäßes oder einer Leitung mit einem strömenden Medium, mit einer ersten Detektionsvorrichtung.

Aus der DE 10 2009 009 592 A1 ist es bekannt, an einer Außenseite eines Druckrohrs eines Wärmetauschers zwei Temperatursensoren in einer Verprägung anzuordnen, um den Wärmestrom zwischen den beiden Temperatursensoren zu ermitteln. Zusätzlich ist ein dritter Temperatursensor vorgesehen, wobei ein weiterer Wärmestrom mittels der durch die drei Temperatursensoren gemessenen Temperaturen ermittelt wird. Der zeitliche Verlauf dieser beiden Wärmeströme wird überwacht und daraus ein Verschmutzungszustand der Außenseite des Druckrohrs ermittelt. Bei diesem Verfahren hat es sich als nachteilig herausgestellt, dass die Bestimmung des Verschmutzungszustands nur bei vorhandener Temperaturdifferenz zwischen der Innenseite und der Außenseite des Druckrohrs möglich ist. Diese Temperaturdifferenz wird vom Prozess erzeugt. Hierdurch wird die verlässliche Detektion von Ablagerungen in sämtlichen Betriebspunkten des Druckrohrs stark eingeschränkt und die Messgenauigkeit extrem reduziert.

Die WO 2014/099 755 A1 beschreibt ein Verfahren zum Detektieren von Ablagerungen und/oder Verschmutzungen, die durch ein flüssiges, strömendes Medium auf einer Oberfläche eines beheizten Sensors hervorgerufen werden. Der Sensor ist in einer von dem Medium durchströmten Durchflusszelle angeordnet und umfasst einen wärmeleitfähigen Block mit einer Heizeinrichtung, die einen primären Wärmestrom durch den Block zu der Sensoroberfläche erzeugt. Über eine der Sensoroberfläche gegenüberliegende Seite des Blocks fließt ein sekundärer Wärmestrom zur Umgebung ab. Ablagerungen und/oder Verschmutzungen auf der Sensoroberfläche erhöhen den Wärmewiderstand im Pfad des primären Wärmestroms, wohingegen der sekundäre Wärmestrom durch diese Ablagerungen nicht beeinflusst wird. Der Block umfasst zwei Temperatursensoren, die in unterschiedlichen Abständen von der Sensoroberfläche angeordnet sind und über die eine Temperaturdifferenz messbar ist. Sofern die Temperatur am Ende des sekundären Wärmepfads, also die Umgebungstemperatur, konstant ist, ist die Temperaturdifferenz der Temperatursensoren linear abhängig von der Dicke der Ablagerungen auf der Sensoroberfläche. Das Verfahren ermöglicht somit die Bestimmung von Ablagerungen und/oder Verschmutzungen auf der Sensoroberfläche über die Messung der Temperaturdifferenz in dem wärmeleitfähigen Block, der den primären Wärmestrom führt. Als nachteilig hat sich bei dem bekannten Verfahren aber herausgestellt, dass es Ungenauigkeiten bei der Bestimmung der Dicke der Ablagerung und/oder Verschmutzungen kommen kann, wenn sich eine Eigenschaft des Mediums, dem die Sensoroberfläche ausgesetzt ist, verändert, wie beispielsweise die Temperatur, die Fließgeschwindigkeit, die Viskosität oder die Konzentration eines Inhaltsstoffs des Mediums. Zur Vermeidung dieser Ungenauigkeiten schlägt die WO 2014/099 755 A1 vor, die anderen Seiten des wärmeleitfähigen Blocks mit demselben Medium zu umströmen wie die Sensoroberfläche, so dass die Umgebung des Blocks dieselbe Temperatur aufweist, wie das Medium. Änderungen der Temperatur des flüssigen Mediums wirken sich dann sowohl auf den primären als auch auf den sekundären Wärmestrom aus und kompensieren sich. Allerdings erfordert ein derartig umströmter Sensor zusätzliche Leitungen für das Medium und beansprucht relativ viel Bauraum.

**Offenbarung der Erfindung**

Die **Aufgabe** der vorliegenden Erfindung ist es, eine verlässliche Detektion von Ablagerungen und/oder Verschmutzungen bei Änderungen von Eigenschaften des die Ablagerungen und/oder Verschmutzungen hervorrufenden, strömenden Mediums, wie beispielsweise Temperatur, Fließgeschwindigkeit, Viskosität und/oder Konzentration eines Inhaltsstoffs, mit einer kompakten Detektionsvorrichtung zu ermöglichen.

Zur **Lösung** der Aufgabe wird eine Detektionsvorrichtung zum Detektieren von Ablagerungen und/oder Verschmutzungen auf einer Sensoroberfläche innerhalb eines Gefäßes oder einer Leitung mit einem strömenden Medium vorgeschlagen, wobei die Detektionsvorrichtung umfasst:

- einen Detektionsabschnitt, der die Sensoroberfläche aufweist und dazu eingerichtet ist, innerhalb des Gefäßes oder innerhalb der Leitung in Kontakt mit dem strömenden Medium angeordnet zu werden,
- einen wärmeleitfähigen Grundkörper, der die Sensoroberfläche aufweist oder mit dieser in direktem Kontakt steht,
- eine an dem Grundkörper angeordnete Wärme- oder Kältequelle zur Erzeugung eines primären Wärmestroms zwischen der Wärme- oder Kältequelle und der Sensoroberfläche sowie eines sekundären Wärmestroms zwischen der Wärme- oder Kältequelle und einer Referenzoberfläche,

- einen ersten Temperatursensor, der in einem ersten Abstand von der Sensoroberfläche an dem Grundkörper angeordnet ist, und einen zweiten Temperatursensor, der in einem zweiten Abstand von Sensoroberfläche an dem Grundkörper angeordnet ist, wobei der zweite Abstand größer ist als der erste Abstand, wobei mittels der Temperatursensoren eine Temperaturdifferenz bestimmbar ist,
- einen wärmeleitfähigen Hüllkörper, der einen außerhalb des Detektionsabschnitts angeordneten Teil des Grundkörpers umhüllt und die Referenzoberfläche aufweist,

wobei die Referenzoberfläche Teil des Detektionsabschnitts ist und die Detektionsvorrichtung eine Außenisolation umfasst, die den Hüllkörper gegenüber seiner äußeren Umgebung isoliert.

Der wärmeleitfähige Grundkörper weist entweder die Sensoroberfläche auf, auf welcher die Ablagerungen und/oder Verschmutzungen detektiert werden können, oder steht mit dieser in direktem Kontakt. Der erste und zweite Temperatursensor sind jeweils in unterschiedlichen Abständen von der Sensoroberfläche angeordnet. Durch die an dem Grundkörper angeordnete Wärme- oder Kältequelle kann in dem Grundkörper ein Temperaturgradient eingestellt werden, der proportional zu dem primären Wärmestrom ist. Bei unveränderter Sensoroberfläche ist diese Temperaturdifferenz konstant. Bereits geringe Ablagerungen und/oder Verschmutzungen auf der Sensoroberfläche führen zu einem Anstieg des Wärmewiderstands, d.h. einer Abnahme des primären Wärmestroms, der als Veränderung der Temperaturdifferenz zwischen dem ersten Temperatursensor und zweiten Temperatursensor messbar ist. Aufgrund der an dem Grundkörper angeordneten Wärme- oder Kältequelle kann grundsätzlich auch bei einem geringen Temperaturunterschied zwischen der Sensoroberfläche und der Umgebung des Grundkörpers eine Temperaturdifferenz zwischen dem ersten und zweiten Temperatursensor eingestellt werden. Es ist daher möglich, Verschmutzungen bzw. Ablagerungen auf der Sensoroberfläche verlässlich zu detektieren. Die erfindungsgemäße Detektionsvorrichtung umfasst zudem einen wärmeleitfähigen Hüllkörper, der den Grundkörper im Bereich außerhalb des Detektionsbereichs, also außerhalb des Gefäßes oder der Leitung, umhüllt. Der Hüllkörper führt den sekundären Wärmestrom und weist die Referenzoberfläche auf, die - ebenso wir die Sensoroberfläche - innerhalb des Gefäßes bzw. der Leitung angeordnet wird, um mit dem zu überwachenden strömenden Medium in Kontakt zu stehen. Die Bildung von Ablagerungen bzw. Verschmutzungen auf der Sensoroberfläche führt zu einer messbaren Veränderung des Verhältnisses des primären Wärmestroms zu dem sekundären Wärmestrom. Die erfindungsgemäße Detektionsvorrichtung ermöglicht daher eine zuverlässige Bestimmung der Verschmutzungen bzw. Ablagerungen. Gemäß der Erfindung ist vorgesehen, dass der Detektionsabschnitt, der dazu eingerichtet ist, innerhalb des Gefäßes oder innerhalb der Leitung in Kontakt mit dem strömenden Medium angeordnet zu werden, sowohl die Sensoroberfläche als auch die Referenzoberfläche aufweist. Zudem ist der Hüllkörper gegenüber der Umgebung durch die Außenisolation isoliert. Folglich führen sowohl der primäre Wärmestrom (zur Sensoroberfläche) als auch der sekundäre Wärmestrom (zur Referenzoberfläche) in das strömende Medium innerhalb des Gefäßes bzw. der Leitung. Änderungen der Flüssigkeit, wie beispielsweise Änderungen der Temperatur, Fließgeschwindigkeit, Viskosität und/oder der Konzentration eines Inhaltsstoffs, wirken sich somit auf den primären und den sekundären Wärmestrom aus und führen nicht zu Ungenauigkeiten bei der Detektion von Ablagerungen und/oder Verschmutzungen. Der Hüllkörper ist gegenüber der Umgebung durch die Außenisolation isoliert, so dass es weder erforderlich ist, den Hüllkörper mit der Flüssigkeit zu umströmen noch aktiv zu kühlen oder aktiv zu erwärmen. Bei der erfindungsgemäßen Detektionsvorrichtung kann auf zusätzliche Leitungen für die Flüssigkeit bzw. Maßnahmen zur Temperierung des Hüllkörpers verzichtet werden. Es wird eine bauraumsparende, kompakte Bauweise ermöglicht.

Da die Referenzoberfläche bei der erfindungsgemäßen Detektionsvorrichtung - anders als etwa im gemäß dem Stand der Technik nach WO 2014/099 755 A1 - in Kontakt mit der Flüssigkeit steht, können sich Ablagerungen und/oder Verschmutzungen auch auf der Referenzfläche bilden. Da der sekundäre Wärmestrom durch die Referenzoberfläche geringer ist als der primäre Wärmestrom durch die Sensoroberfläche kann an der Referenzoberfläche eine geringere Temperatur erreicht werden als auf der Sensoroberfläche, so dass die Bildung von Ablagerungen und/oder Verschmutzungen auf der Referenzoberfläche möglichst gering gehalten werden kann.

Das strömende Medium in dem Gefäß oder der Leitung kann ein flüssiges Medium oder ein gasförmiges Medium oder ein teilweise flüssiges und teilweise gasförmiges Medium sein.

Bevorzugt isoliert die Außenisolation den Hüllkörper derart gegenüber seiner äußeren Umgebung, dass der sekundäre Wärmestrom größer ist als ein parasitärer Wärmestrom zwischen der Wärme- oder Kältequelle und der Umgebung durch den Hüllkörper und durch die Außenisolation.

Der Hüllkörper kann beispielsweise aus einem Metall ausgebildet sein. Bevorzugt ist der Hüllkörper aus Titan ausgebildet. Alternativ kann vorgesehen sein, dass der Hüllkörper aus einem Kunststoff ausgebildet ist.

Bevorzugt ist der Detektionsabschnitt eine Detektionsoberfläche. Insofern können die Sensoroberfläche und die Referenzoberfläche miteinander fluchtend angeordnet sein.

Wenn die Detektionsvorrichtung eine Wärmequelle aufweist, ist diese bevorzugt als einstellbare, besonders bevorzugt regelbare, insbesondere geregelte, Wärmequelle ausgebildet. Wenn die Detektionsvorrichtung eine Kältequelle aufweist, ist diese bevorzugt als einstellbare, besonders bevorzugt regelbare, insbesondere geregelte, Kältequelle ausgebildet. Durch die einstellbare Wärme- bzw. Kältequelle kann eine Heizleistung bzw. eine Kühlleistung vorgegeben werden. Eine derartige Ausgestaltung bringt den Vorteil mit sich, dass die Temperatur an der Sensoroberfläche durch Einstellen der Wärmequelle bzw. Kältequelle beeinflusst werden kann. Es ist daher möglich, die Temperatur der Sensoroberfläche an die Temperatur des an der Sensoroberfläche anliegenden strömenden Mediums anzupassen. Ferner kann die Detektionseinrichtung genutzt werden, um einen Wärmeübergang über eine Wandung eines Prozessgefäßes oder einer Prozessleitung zu emulieren. Beispielsweise kann eine rechnerische Temperatur an einer Referenzstelle innerhalb des Grundkörpers derart eingestellt werden, dass diese einer Temperatur an einer Innen- oder Außenwandung des Prozessgefäßes oder der Prozessleitung entspricht. Der Abstand der Referenzstelle von der Sensoroberfläche kann derart gewählt werden, dass dieser - unter Berücksichtigung der Wärmeleitfähigkeit des Werkstoffs - einer Wandstärke der Wandung des Prozessgefäßes oder der Prozessleitung entspricht.

Als konstruktiv vorteilhaft hat sich eine Ausgestaltung herausgestellt, bei welcher die Wärme- oder Kältequelle und der erste Temperatursensor und der zweite Temperatursensor entlang einer virtuellen Geraden angeordnet sind.

Die Wärmequelle kann als Heizelement, beispielsweise als elektrisches, insbesondere resistives, Heizelement ausgestaltet sein. Die Kältequelle kann beispielsweise als Peltier-Element ausgestaltet sein.

Bevorzugt ist in dem Grundkörper eine erste Ausnehmung vorgesehen, in welcher der erste Temperatursensor angeordnet ist, und/oder eine zweite Ausnehmung, in welcher der zweite Temperatursensor angeordnet ist, und/oder eine dritte Ausnehmung, in welcher die Wärmequelle oder die Kältequelle angeordnet ist. Das Vorsehen von Ausnehmungen ermöglicht mit geringen Fertigungsaufwand eine haltbare Befestigung des jeweiligen Temperatursensors bzw. der Wärme- oder Kältequelle an dem Grundkörper. Die dritte Ausnehmung, in welchem die Wärmequelle oder die Kältequelle angeordnet ist, ist bevorzugt an einer rückwärtigen Oberfläche des Grundkörpers angeordnet, die der Sensoroberfläche gegenüberliegt. Die erste und zweite Ausnehmung, in dem die Temperatursensoren angeordnet sind, sind bevorzugt zwischen der Sensoroberfläche und der rückwärtigen Oberfläche angeordnet. Die erste, zweite und/oder dritte Ausnehmung können jeweils als Fase in einer, insbesondere zylindrischen, Außenwandung des Grundkörpers ausgebildet sein. Alternativ ist es möglich, dass die erste, zweite und/oder dritte Ausnehmung als Sackloch ausgebildet ist.

Gemäß einer vorteilhaften Ausgestaltung ist vorgesehen, dass der Grundkörper stabförmig ist, insbesondere mit einem runden Querschnitt. Alternativ kann vorgesehen sein, dass der Grundkörper einen drei- vier- fünf-, sechs-, sieben-, acht- oder mehreckigen Querschnitt aufweist.

Eine vorteilhafte Ausgestaltung der Erfindung sieht vor, dass der Grundkörper hinsichtlich seiner Wärmeleitfähigkeit isotrop und homogen ist. Das bedeutet, dass das die Wärmeleitfähigkeit des Grundkörpers über seine gesamte Ausdehnung identisch ist und nicht abhängig von der Richtung ist, in welcher die Wärmeleitung erfolgt. Bei einer derartigen Ausgestaltung kann ein linearer Temperaturverlauf in dem Grundkörper ausgehend von der Wärme- oder Kältequelle bis zu der Sensoroberfläche ermöglicht werden. Der Grundkörpers ist insbesondere aus einem der folgenden Werkstoffe hergestellt: Stahl, Kupfer, Messing, insbesondere CuZn39Pb3 (veraltete Bezeichnung Ms 58).

Gemäß einer vorteilhaften Ausgestaltung ist vorgesehen, dass die Detektionsvorrichtung einen dritten Temperatursensor umfasst, der in einem dritten Abstand von der Sensoroberfläche an dem Grundkörper angeordnet ist, wobei der dritte Abstand größer ist als der zweite Abstand. Bevorzugt sind die Wärme- oder Kältequelle und der erste Temperatursensor und der zweite Temperatursensor und der dritte Temperatursensor entlang einer virtuellen Geraden angeordnet. Konstruktiv vorteilhaft ist es, wenn der Grundkörper eine weitere Ausnehmung, beispielsweise ein weiteres Sackloch, umfasst, in welchem der dritte Temperatursensor angeordnet ist. Durch den dritten Temperatursensor können zusätzliche Informationen erhalten werden, welche die Detektion von Ablagerungen und/oder Verschmutzungen weiter verbessern. Beispielsweise kann der dritte Temperatursensor anstelle des ersten oder anstelle des zweiten Temperatursensors verwendet werden, sofern der erste oder zweite Temperatursensor defekt ist oder aus einem anderen Grund keine Temperatur messen kann. Ferner ist es möglich, sowohl eine Temperaturdifferenz zwischen dem ersten Temperatursensor und dem zweiten Temperatursensor als auch eine Temperaturdifferenz zwischen dem zweiten Temperatursensor und dem dritten Temperatursensor zu bestimmen. Aus diesen Temperaturdifferenzen und dem jeweiligen Abstand der Temperatursensoren untereinander kann ein Temperaturgradient zwischen dem ersten und zweiten Temperatursensor und ein Temperaturgradient zwischen dem zweiten und dritten Temperatursensor ermittelt werden. Diese Temperaturgradienten müssen im Idealfall identisch sein. Sollten die Temperaturgradienten voneinander abweichen, kann daraus ein Rückschluss auf einen Wärmeverlust in einer Richtung senkrecht zur Gerade zwischen der Wärme- bzw. Kältequelle und der Sensoroberfläche geschlossen werden. Dies kann beispielsweise auf eine schlechte thermische Isolation oder ein unerwünschtes Eindringen eines Mediums in die Detektionsvorrichtung hinweisen.

Bevorzugt ist vorgesehen, dass die Wärmequelle in einem vierten Abstand von der Sensoroberfläche angeordnet ist, wobei der vierte Abstand größer ist als der zweite Abstand, ggf. größer ist als der der dritte Abstand.

Als vorteilhaft hat sich eine Ausgestaltung der Erfindung erwiesen, bei welcher die Detektionsvorrichtung eine den Grundkörper umgebende Isolationseinrichtung umfasst, die zwischen einer Außenkontur des Grundkörpers und einer Innenkontur des Hüllkörpers angeordnet ist. Bei einer solchen Ausgestaltung befindet sich die Isolationseinrichtung in dem Pfad des zweiten Wärmestroms. Bevorzugt ist der Wärmewiderstand des zweiten Wärmepfads höher als der Wärmewiderstand des ersten Wärmepfads ohne Ablagerungen und/oder Verunreinigungen auf der Sensoroberfläche.

Vorteilhaft ist eine Ausgestaltung, bei welcher die den Grundkörper umgebende Isolationseinrichtung an allen Seiten des Grundkörpers einen identischen Wärmewiderstand aufweist. Insbesondere weist die Isolationseinrichtung an einer der Sensoroberfläche gegenüberliegenden Stirnseite des Grundkörpers und an einer radialen Umfangsfläche des Grundkörpers einen identischen Wärmewiderstand auf.

Eine vorteilhafte Ausgestaltung sieht vor, dass die den Grundkörper umgebende Isolationseinrichtung eine Schüttung oder ein poröses Material, beispielsweise einen Schaum, aufweist. Die Schüttung weist bevorzugt Partikel mit einer Korngröße (volumenäquivalenter Kugeldurchmesser) im Bereich 1 Mikrometer bis 10 Millimeter, bevorzugt im Bereich 1 Mikrometer bis 1 Millimeter, besonders bevorzugt im Bereich 1 Mikrometer bis 100 Mikrometer, beispielsweise im Bereich 1 Mikrometer bis 10 Mikrometer, auf. Die Korngrößenverteilung der Schüttung ist bevorzugt möglichst homogen. Die Schüttung umfasst bevorzugt organische Partikel, wie beispielweise geschäumtes Polysterol und/oder anorganische Partikel, wie beispielsweise Mineralien, Salze von Mineralsäuren, Puzzolane oder Tonmineralien. Bevorzugt ist die Schüttung derart zwischen dem Grundkörper und dem Hüllkörper angeordnet, dass sie nicht mobil ist.

Eine alternative, vorteilhafte Ausgestaltung sieht vor, dass die den Grundkörper umgebende Isolationseinrichtung ein Gas oder Gasgemisch umfasst oder ein Gas oder Gasgemisch ist, welches zwischen dem Grundkörper und dem Hüllkörper eingeschlossen ist. Das Gasgemisch kann beispielsweise Luft sein.

Bevorzugt weist die Außenisolation einen Isolatorkörper auf. Eine vorteilhafte Ausgestaltung sieht vor, dass die Außenisolation, die den Hüllkörper gegenüber der Umgebung isoliert, Glaswolle und/oder Holzwolle und/oder Steinwolle aufweist.

Zur **Lösung** eingangs genannter Aufgabe wird ferner eine Detektionsanordnung zur Detektion von Ablagerungen und/oder Verschmutzungen eines strömenden Mediums an einer Wandung eines Gefäßes oder einer Leitung mit einer vorstehend beschriebenen Detektionsvorrichtung vorgeschlagen, wobei der Detektionsabschnitt, der die Sensoroberfläche und die Referenzoberfläche aufweist, als Teil der Wandung vorgesehen ist.

Durch die Verwendung einer solchen Detektionsvorrichtung wird es verlässlich möglich, solche Ablagerungen und/oder Verschmutzungen eines strömenden Mediums zu detektieren, die sich an einer Wandung eines Gefäßes oder einer Leitung anlagern. Die Detektionsvorrichtung ist dabei als Teil der Wandung des Gefäßes oder der Leitung vorgesehen, so dass auf der Sensoroberfläche der Detektionsvorrichtung dieselben Ablagerungserscheinungen auftreten, wie auf dem Rest der Wandung.

Bei der Wandung handelt es sich bevorzugt um eine Innenwandung, also eine innere Oberfläche einer Wandung. Alternativ kann die Wandung eine Außenwandung sein, also eine äußere Oberfläche einer Wandung, beispielsweise einer Außenwandung eines Flammrohrs.

Bei dem Gefäß oder der Leitung kann es sich beispielsweise um einen Teil eines Wärmeübertragungssystems, insbesondere eines Wärmetauschers, Reaktors oder eine Mantelkühlung, oder eine einem solchen Wärmeübertragungssystem vor- oder nachgeschaltete Rohrleitung handeln. Das Gefäß oder die Leitung kann Teil einer chemischen, insbesondere petrochemischen, Anlage sein, beispielsweise Teil einer Verdampferanlage, eines Kühlturms oder eines Rohrbündelwärmetauschers.

Eine vorteilhafte Ausgestaltung der Detektionsanordnung sieht mehrere vorstehend beschriebene Detektionsvorrichtungen vor, wobei der Detektionsabschnitt der jeweiligen Detektionsvorrichtung, der die Sensoroberfläche und die Referenzoberfläche aufweist, als Teil der Wandung vorgesehen ist. Eine derartige Ausgestaltung mit mehreren Detektionsvorrichtungen ermöglicht einerseits eine redundante Ausgestaltung der Detektionsanordnung. Zudem wird es durch das Vorsehen mehrerer Detektionsvorrichtungen möglich, diese zur Detektion unterschiedlicher Ablagerungen zu nutzen. So kann durch eine unterschiedliche Einstellung der Heizleistung der jeweiligen Wärmequellen bzw. der Kühlleistung der jeweiligen Kühlquellen der Detektionsvorrichtungen unterschiedliche Temperaturen an der jeweiligen Sensoroberfläche eingestellt werden. Hierdurch können die Detektionsvorrichtungen eine unterschiedliche Sensitivität für Ablagerungen aufweisen. Beispielsweise wird es möglich, organische Ablagerungen von anorganischen Ablagerungen zu unterscheiden.

Alternativ oder zusätzlich zu den vorstehend beschriebenen vorteilhaften Ausgestaltungen der Detektionsanordnung können auch die im Zusammenhang mit der Detektionsvorrichtung beschriebenen vorteilhaften Ausgestaltungen und Merkmale allein oder in Kombination Anwendung finden.

Zur **Lösung** eingangs genannter Aufgabe trägt ferner ein Verfahren zum Detektieren von Ablagerungen und/oder Verschmutzungen auf einer Sensoroberfläche innerhalb eines Gefäßes oder einer Leitung mit einem strömenden Medium, mit einer ersten Detektionsvorrichtung bei, die umfasst:

- einen wärmeleitfähigen Grundkörper, der die Sensoroberfläche aufweist oder mit dieser in direktem Kontakt steht,
- eine an dem Grundkörper angeordnete Wärme- oder Kältequelle, die einen primären Wärmestroms zwischen der Wärme- oder Kältequelle und der Sensoroberfläche sowie einen sekundären Wärmestroms zwischen der Wärme- oder Kältequelle und einer Referenzoberfläche erzeugt,
- einen Detektionsabschnitt, der die Sensoroberfläche und die Referenzoberfläche aufweist und innerhalb des Gefäßes oder innerhalb der Leitung in Kontakt mit dem strömenden Medium angeordnet ist,
- einen wärmeleitfähigen Hüllkörper, der einen außerhalb des Detektionsabschnitts angeordneten Teil des Grundkörpers umhüllt und die Referenzoberfläche aufweist,
- eine Außenisolation, die den Hüllkörper gegenüber seiner äußeren Umgebung isoliert, und
- einen ersten Temperatursensor, der in einem ersten Abstand von der Sensoroberfläche an dem Grundkörper angeordnet ist, und einen zweiten Temperatursensor, der in einem zweiten Abstand von Sensoroberfläche an dem Grundkörper angeordnet ist, wobei der zweite Abstand größer ist als der erste Abstand,

wobei mittels der Temperatursensoren der ersten Detektionsvorrichtung eine Temperaturdifferenz bestimmt wird und anhand der Temperaturdifferenz Ablagerungen und/oder Verschmutzungen auf einer Sensoroberfläche detektiert werden.

Bei dem Verfahren können dieselben Wirkungen und Vorteile erreicht werden, die bereits im Zusammenhang mit der Detektionsvorrichtung gemäß der Erfindung erläutert worden sind.

Bei dem Verfahren wird eine Temperaturdifferenz zwischen der ersten Temperatur und der zweiten Temperatur ermittelt. Besonders bevorzugt wird ein zeitlicher Verlauf der Temperaturdifferenz überwacht. Aus einer Veränderung der Temperaturdifferenz kann auf Ablagerungen und/oder Verschmutzungen auf der Sensoroberfläche geschlossen werden. Daher kann zur Initialisierung der Detektionsvorrichtung eine Kalibrierungsmessung durchgeführt werden, in welcher eine Kalibrierungs-Temperaturdifferenz ermittelt wird. Temperaturdifferenzen, die durch weitere Messungen mit der Detektionsvorrichtung erhalten werden, können dann mit der Kalibrierungs-Temperaturdifferenz verglichen werden.

Bevorzugt wird ein Maß PFL für die Menge bzw. Dicke der Ablagerungen und/oder Verschmutzungen bestimmt als

$$PFL = \left(1 - \frac{\Delta T_{12\_act}}{\Delta T_{12\_cal}}\right) * 100\%$$

wobei $\Delta T_{12\_act}$ die aktuell gemessene Temperaturdifferenz ist und $\Delta T_{12\_cal}$ die im Rahmen einer Kalibrierung gemessene Kalibrierungs-Temperaturdifferenz ist.

Eine vorteilhafte Ausgestaltung des Verfahrens sieht vor, dass die Wärmequelle mit einer konstanten Heizleistung betrieben wird oder die Kältequelle mit einer konstanten Kühlleistung betrieben wird. Durch die Vorgabe einer konstanten Heiz- bzw. Kühlleistung kann ein - unter Vernachlässigung von Ablagerungen an der Sensoroberfläche - zeitlich stabiler Temperaturgradient in dem Grundkörper, insbesondere zwischen dem ersten und zweiten Temperatursensor, eingestellt werden. Insofern kann aus gemessenen Veränderungen der Temperaturdifferenz zwischen der ersten Temperatur und der zweiten Temperatur auf Ablagerungen an der Sensoroberfläche gefolgert werden.

Eine alternative, vorteilhafte Ausgestaltung sieht vor, dass eine Heizleistung der Wärmequelle bzw. eine Kühlleistung der Kältequelle in Abhängigkeit von einer Temperatur des die Anlagerungen und/oder Verschmutzungen hervorrufenden strömenden Mediums eingestellt wird. Hierdurch kann eine Ausgestaltung erhalten werden, bei welcher die Temperatur der Heizeinrichtung, der Temperatur des in dem Gefäß oder der Leitung strömenden Medium folgt. Ein solche Ausgestaltung ist insbesondere bei Batch-Prozesses von Vorteil, bei denen sich die Temperatur des strömenden Mediums im Verlauf des Batch-Prozesses verändert.

Das erfindungsgemäße Verfahren zum Detektieren von Ablagerungen und/oder Verschmutzungen auf einer Sensoroberfläche innerhalb eines Gefäßes oder einer Leitung mit einem strömenden Medium kann ferner eingesetzt werden, um durch ein, insbesondere flüssiges, Kühlmedium hervorgerufene Ablagerungen an einer Wandung eines Wärmetauschers zu bestimmen, der einen Wärmeaustausch zwischen einem Prozessmedium und dem Kühlmedium ermöglicht. Dazu ist es nicht erforderlich, die Detektionsvorrichtung innerhalb des Wärmetauschers anzuordnen. Vielmehr ist gemäß einer vorteilhaften Ausgestaltung des erfindungsgemäßen Verfahrens vorgesehen, dass die erste Detektionsvorrichtung in einer mit dem Kühlmedium gefüllten Zu- oder Ableitung eines Wärmetauschers angeordnet ist, wobei der Wärmetauscher einen Wärmeaustausch durch eine Wärmetauscher-Wandung zwischen einem Prozessmedium und dem Kühlmedium ermöglicht, wobei eine Heizleistung der Wärmequelle bzw. eine Kühlleistung der Kältequelle in Abhängigkeit von einer Prozesstemperatur des Prozessmediums einstellt wird.

Bevorzugt ist eine Ausgestaltung, bei welcher in Abhängigkeit von der Prozesstemperatur und einer Wärmeleitfähigkeit der Wärmetauscher-Wandung und einer Wandstärke der Wärmetauscher-Wandung ein virtueller Abstand in dem Grundkörper der ersten Detektionseinrichtung von der Sensoroberfläche bestimmt wird, bei welchem die Prozesstemperatur anliegen muss, um an der Sensoroberfläche im Wesentlichen dieselbe Temperatur einzustellen wie an der mit dem Kühlmedium in Kontakt stehenden Oberfläche der Wärmetauscher-Wandung. Der virtuelle Abstand $x_{emul}$ kann beispielsweise mit folgender Formel berechnet werden:

$$x_{emul} = d_w \cdot \lambda_s / \lambda_w$$

wobei

$d_w$: Wandstärke der Wärmetauscher-Wandung
$\lambda_s$: Wärmeleitfähigkeit des Grundkörpers der Detektionsvorrichtung
$\lambda_w$: Wärmeleitfähigkeit der Wärmetauscher-Wandung.

Die Prozesstemperatur kann durch einen Benutzer vorgegeben werden, also als konstanter Wert oder als Temperaturverlauf. Alternativ ist es möglich, die Prozesstemperatur mittels eines Prozess-Temperatursensors zu messen und die gemessene Prozesstemperatur bei der Bestimmung des virtuellen Abstands $x_{emul}$ zu berücksichtigen.

Bevorzugt ist eine Ausgestaltung, bei welcher die Heizleistung der Wärmequelle bzw. Kühlleistung der Kältequelle zusätzlich in Abhängigkeit von den mit dem ersten und zweiten Temperatursensor ermitteln Temperaturen derart eingestellt wird, dass in dem virtuellen Abstand von der Sensoroberfläche die Prozesstemperatur erreicht wird. Die Heizleistung P der Wärmequelle ergibt sich zu

$$P = \lambda_s A_s \, (T_1 - T_2)/(x_2 - x_1)$$

wobei

$\lambda_s$: Wärmeleitfähigkeit des Grundkörpers der Detektionsvorrichtung
$A_s$: Querschnittsfläche des Grundkörpers der Detektionsvorrichtung
$T_1$: erste Temperatur
$T_2$: zweite Temperatur
$x_1$: erster Abstand (Ort des ersten Temperatursensors)
$x_2$: zweite Abstand (Ort des zweiten Temperatursensors)

Dabei werden für die erste Temperatur $T_1$ und die zweite Temperatur $T_2$ folgende Sollwerte in Abhängigkeit von dem virtuellen Abstand $x_{emul}$, den Abständen $x_1$, $x_2$ der Temperatursensoren von der Sensorfläche und der vorgegebenen Prozesstemperatur $T_P$ vorgegeben:

$$T_1 = T_P/x_{emul} \cdot x_1$$

$$T_2 = T_P/x_{emul} \cdot x_2$$

Gemäß einer vorteilhaften Ausgestaltung des Verfahrens ist vorgesehen, dass mit einen dritten Temperatursensor eine dritte Temperatur gemessen wird, welcher in einem dritten Abstand von der Sensoroberfläche an dem Grundkörper angeordnet ist, wobei der dritte Abstand größer ist als der zweite Abstand, wobei ein erster Temperaturgradient zwischen dem ersten und zweiten Temperatursensor und ein zweiter Temperaturgradient zwischen dem zweiten und dritten Temperatursensor ermittelt, bevorzugt miteinander verglichen wird. Der erste Temperaturgradient kann anhand einer Temperaturdifferenz der ersten und zweiten Temperatur und den Abstand des ersten und zweiten Temperatursensors voneinander ermittelt werden. Ebenso kann der zweite Temperaturgradient anhand einer Temperaturdifferenz der zweiten und dritten Temperatur und dem Abstand des zweiten und dritten Temperatursensors ermittelt werden. Diese Temperaturgradienten müssen im Idealfall identisch sein. Sollten die Temperaturgradienten voneinander abweichen, kann daraus ein Rückschluss auf einen Wärmeverlust in einer Richtung senkrecht zur Gerade zwischen der Wärme- bzw. Kältequelle und der Sensoroberfläche geschlossen werden. Dies kann beispielsweise auf eine schlechte thermische Isolation oder ein unerwünschtes Eindringen eines Mediums in die Detektionsvorrichtung hinweisen. Besonders bevorzugt wird ein dritter Temperaturgradient zwischen dem ersten und dem dritten Temperatursensor ermittelt. Der dritte Temperaturgradient kann anhand einer Temperaturdifferenz der ersten und dritten Temperatur und den Abstand des ersten und dritten Temperatursensors voneinander ermittelt werden. Der dritte Temperaturgradient kann mit dem ersten und oder zweiten Temperaturgradient verglichen werden. Denn auch diese Temperaturgradienten müssen im Idealfall identisch sein.

Gemäß einer vorteilhaften Ausgestaltung des Verfahrens ist vorgesehen, dass eine Temperaturdifferenz zwischen der ersten und zweiten Temperatur ermittelt wird und in Abhängigkeit von der ermittelten Temperaturdifferenz ein Additiv in das Prozessgefäß oder in die Prozessleitung eingeleitet wird. Bei einer derartigen Ausgestaltung können Ablagerungen bei ihrem Entstehen, insbesondere in Echtzeit, erkannt und geeignete Gegenmaßnahmen unmittelbar eingeleitet werden. So kann das Additiv beispielsweise in Reaktion auf eine Veränderung der ermittelten Temperaturdifferenz in das Prozessgefäß oder die Prozessleitung eingeleitet werden, um die erkannten Ablagerungen und/oder Verschmutzungen zu entfernen. Hierbei ist es von Vorteil, wenn die Einleitung zeitlich kurz nach dem Erkennen der Ablagerung erfolgt, da zu diesem Zeitpunkt etwaige Kristallisations- oder Polymerisierungsreaktionen noch nicht vollständig abgeschlossen sind. Bei dem Additiv kann es sich um eine Härtestabilisator oder einen Dispergator handeln.

Bevorzugt wird eine Menge des eingeleiteten Additivs in Abhängigkeit von der ermittelten Temperaturdifferenz bzw. der ermittelten Änderung der Temperaturdifferenz eingestellt, so dass eine verschmutzungssituationsabhängige Dosierung des Additivs erfolgt. Hierdurch können übermäßige Gaben des Additivs verhindert werden.

Eine vorteilhafte Ausgestaltung der Erfindung sieht vor, dass eine zweite Detektionsvorrichtung vorgesehen ist, die einen, insbesondere stabförmigen, zweiten Grundkörper umfasst, der eine zweite Sensoroberfläche aufweist, welche als Teil der Wandung vorgesehen ist, wobei mit einem weiteren ersten Temperatursensor, der in einem weiteren ersten Abstand von der zweiten Sensoroberfläche an dem zweiten Grundkörper angeordnet ist, eine weitere erste Temperatur gemessen wird, wobei mit einem weiteren zweiten Temperatursensor, der in einem weiteren zweiten Abstand von zweiten Sensoroberfläche an dem zweiten Grundkörper angeordnet ist, wobei der weitere zweite Abstand größer ist als der weitere erste Abstand, eine weitere zweite Temperatur gemessen wird, und wobei mit einer an dem zweiten Grundkörper angeordneten zweiten Wärmequelle oder zweiten Kältequelle, ein Temperaturgradient zwischen dem weiteren ersten Temperatursensor und dem weiteren zweiten Temperatursensor erzeugt wird, wobei die erste Wärmequelle oder die erste Kältequelle derart betrieben wird, dass an der ersten Sensoroberfläche eine erste Oberflächentemperatur, insbesondere im Bereich zwischen 35°C und 40°C, eingestellt wird und die zweite Wärmequelle oder die zweite Kältequelle derart betrieben wird, dass an der zweiten Sensoroberfläche eine zweite Oberflächentemperatur, insbesondere im Bereich zwischen 45°C und 55°C, eingestellt wird, die sich von der ersten Oberflächentemperatur unterscheidet. Durch die Verwendung einer ersten und einer zweiten Detektionsvorrichtung wird es bei dem Verfahren möglich, verschiedene Ablagerungen und/oder Verschmutzungen voneinander zu unterscheiden und ggf. durch unterschiedliche Maßnahmen zu bekämpfen. Wird beispielsweise die erste Oberflächentemperatur im Bereich zwischen 35°C und 40°C, insbesondere auf 37°C, eingestellt, so lagern sich auf der ersten Sensoroberfläche vermehrt organische Ablagerungen und/oder Verschmutzungen an. Wird die zweite Oberflächentemperatur im Bereich zwischen 45°C und 55°C, insbesondere auf 50 °C, eingestellt, so lagern sich auf der zweiten Sensoroberfläche vermehrt anorganische Ablagerungen und/oder Verschmutzungen ab. Durch einen Vergleich der von den beiden Detektionsvorrichtungen erfassten Temperaturdifferenzen kann auf die Zusammensetzung der in dem Gefäß oder in der Leitung gebildeten Ablagerungen und/oder Verschmutzungen geschlossen werden. Bevorzugt wird die erste Oberflächentemperatur und die zweite Oberflächentemperatur derart eingestellt, dass eine Oberflächentemperaturdifferenz zwischen der ersten Oberflächentemperatur und der zweiten Oberflächentemperatur in einem Bereich von 1°C bis 100°C oder in einem Bereich von 1°C bis 75°C Bereich von 1°C bis 50°C oder Bereich von 1°C bis 40°C oder Bereich von 1°C bis 30°C oder Bereich von 1°C bis 20°C oder Bereich von 1°C bis 10°C oder Bereich von 1°C bis 5°C oder Bereich von 1°C bis 3°C liegt. Beispielsweise kann die Oberflächentemperaturdifferenz auf 1°C oder 2°C oder 3°C oder 4°C oder 5°C oder 6°C oder 7°C oder 8°C oder 9°C oder 10°C oder 15°C oder 20°C eingestellt werden.

Bevorzugt wird eine erste Temperaturdifferenz mit der ersten Detektionsvorrichtung ermittelt und ein erstes Additiv in Abhängigkeit von der ermittelten ersten Temperaturdifferenz in das Prozessgefäß oder in die Prozessleitung eingeleitet und eine zweite Temperaturdifferenz mit der zweiten Detektionsvorrichtung ermittelt und ein zweites Additiv in Abhängigkeit von der ermittelten zweiten Temperaturdifferenz in das Prozessgefäß oder in die Prozessleitung eingeleitet. Dieses Vorgehen bietet den Vorteil, dass die Zugabe von Additiven auf die detektierte Zusammensetzung der Ablagerungen abgestimmt erfolgen kann. Überdosierungen können auf diese Weise wirksam vermieden werden. Alternativ oder zusätzlich kann in Abhängigkeit von der ermittelten ersten oder zweiten Temperaturdifferenz ein Alarm ausgelöst werden oder es kann in Abhängigkeit von der ermittelten ersten oder zweiten Temperaturdifferenz ein Prozessparameter eingestellt werden.

In diesem Zusammenhang ist es vorteilhaft, wenn ein Verlauf einer Temperatur des strömenden Mediums vorgegeben wird, wobei der Verlauf eine aktuelle erste Prozesstemperatur und eine zukünftige, zweite Prozesstemperatur umfasst, wobei die erste Oberflächentemperatur die erste Prozesstemperatur ist und die zweite Oberflächentemperatur die zweite Prozesstemperatur ist. Bei einer derartigen Ausgestaltung kann mit der zweiten Detektionsvorrichtung eine Emulation des Prozessverlauf erfolgen, so dass zukünftig (also bei der zweiten Prozesstemperatur) wahrscheinlich auftretende Ablagerungen und/oder Verunreinigungen bereits erkannt werden können, bevor sie im Prozessverlauf tatsächlich auftreten.

Alternativ oder zusätzlich zu den vorstehend beschriebenen vorteilhaften Ausgestaltungen des Verfahrens können auch die im Zusammenhang mit der Detektionsvorrichtung und/oder Detektionsanordnung beschriebenen vorteilhaften Ausgestaltungen und Merkmale allein oder in Kombination Anwendung bei dem Verfahren finden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

## Kurze Beschreibung der Figuren

Die **Fig. 1** zeigt ein erstes Ausführungsbeispiel einer Detektionsvorrichtung gemäß der Erfindung in einer schematischen Schnittdarstellung.

Die **Fig. 2** zeigt die Detektionsvorrichtung nach Fig. 1 mit Hervorhebung der wesentlichen Wärmeströme.

Die **Fig. 3** zeigt ein erstes Ausführungsbeispiel einer Detektionsanordnung mit einer Detektionsvorrichtung gemäß der Erfindung.

Die **Fig. 4** zeigt ein zweites Ausführungsbeispiel einer Detektionsanordnung mit mehreren Detektionsvorrichtungen gemäß der Erfindung.

Die **Fig. 5** zeigt eine Darstellung zur Veranschaulichung der Vorgänge beim Emulieren des Wärmeübergangs in einem Wärmetauscher.

## Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

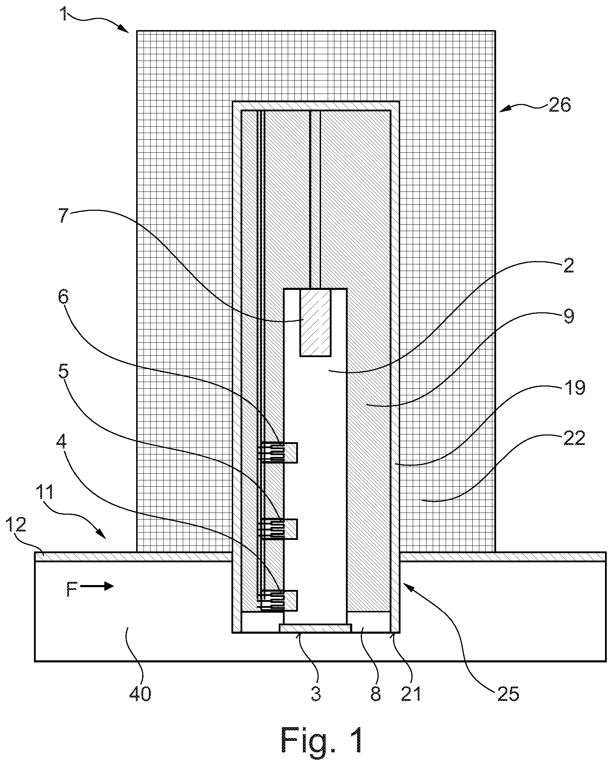

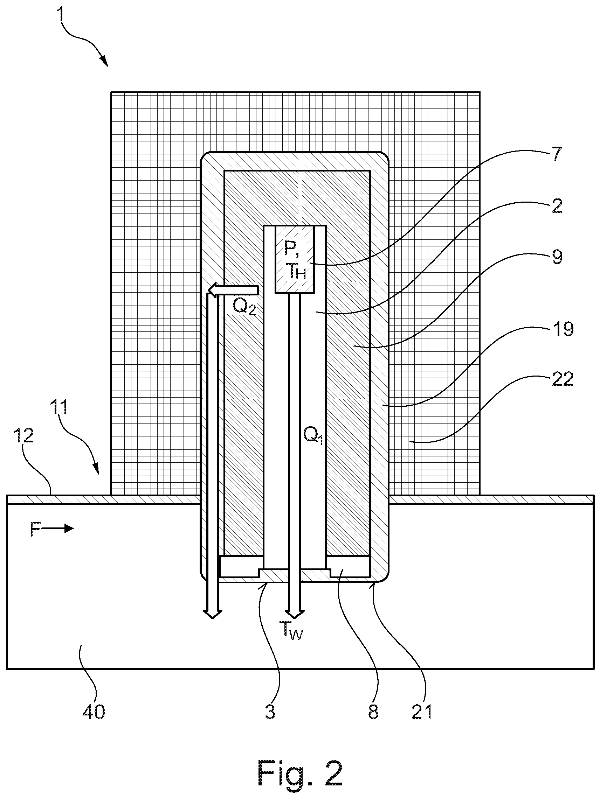

Die Darstellungen in **Fig. 1 und 2** zeigen eine Detektionsvorrichtung 1 zum Detektieren von Ablagerungen und/oder Verschmutzungen auf einer Sensoroberfläche 3 innerhalb eines Gefäßes oder einer Leitung 11, das oder die mit einem in einer Strömungsrichtung F strömenden Medium 40 gefüllt ist. Die Detektionsvorrichtung 1 umfasst einen Detektionsabschnitt 25, der innerhalb des Gefäßes oder innerhalb der Leitung 11 in Kontakt mit dem Medium 40 angeordnet ist und daher auch als Innenabschnitt bezeichnet werden kann. Der Detektionsabschnitt 25 umfasst sowohl die Sensoroberfläche 3 als auch eine Referenzoberfläche 21. Ferner weist die Detektionsvorrichtung 1 einen Außenabschnitt 26 auf, der außerhalb des Gefäßes bzw. der Leitung 11 angeordnet ist.

Der Grundkörper 2 ist stabförmig ausgebildet und weist einen runden Querschnitt auf. Hinsichtlich seiner Wärmeleitfähigkeit ist der Grundkörper 2 isotrop und homogen ausgestaltet. Insofern handelt es sich um einem im Wesentlichen zylindrischen Grundkörper 2. An dem Grundkörper 2 sind mehrere, hier genau drei, Temperatursensoren 4, 5, 6 angeordnet. Ein erster Temperatursensor 4 ist dabei in einem ersten Abstand von der Sensoroberfläche 3 an dem Grundkörper 2 angeordnet und ein zweiter Temperatursensor 5 ist in einem zweiten Abstand von Sensoroberfläche 3 an dem Grundkörper 2 angeordnet, der größer ist als der erste Abstand. Ein dritter Temperatursensor 6 befindet sich an dem Grundkörper 2 in einem dritten Abstand, der größer ist als der zweite Abstand. Alle Temperatursensoren sind auf einer gemeinsamen virtuellen Geraden angeordnet, die senkrecht auf der Sensoroberfläche 3 steht.

Die Sensoroberfläche 3 ist gemäß diesem Ausführungsbeispiel als separate Abschlussplatte, beispielsweise aus einem Metall, bevorzugt aus Titan, ausgebildet. Der Grundkörper 2 ist unmittelbar mit der Abschlussplatte verbunden. Alternativ ist es möglich, dass die Sensoroberfläche 3 Teil des Grundkörpers 2 ist. Zwischen der Sensoroberfläche 3 und der Referenzoberfläche 21 ist eine Isoliereinrichtung 8 vorgesehen, welche die beiden Oberflächen thermisch isoliert. Die Isoliereinrichtung 8 kann beispielsweise aus PEEK ausgebildet sein.

Ein weiterer Bestandteil der Detektionsvorrichtung 1 ist eine an dem Grundkörper angeordnete Wärmequelle 7, mit welcher eine Temperaturdifferenz zwischen dem ersten Temperatursensor 4 und zweiten Temperatursensor 5 bzw. zwischen dem zweiten Temperatursensor 5 und dem dritten Temperatursensor 6 bzw. zwischen dem ersten Temperatursensor 4 und dem dritten Temperatursensor 6 erzeugt werden kann. Anstelle der Wärmequelle 7 kann alternativ eine Kältequelle vorgesehen sein. Die Wärmequelle 7 ist gemäß dem Ausführungsbeispiel als elektrisches Heizelement ausgestaltet, welches den Grundkörper resistiv beheizen kann. Die Wärmequelle 7 ist in einem vierten Abstand von der Sensoroberfläche 3 angeordnet, welcher größer ist als der erste, zweite und dritte Abstand. Im vorliegenden Ausführungsbeispiel ist die Wärmequelle 7 an einer rückwärtigen Oberfläche des Grundkörpers 2 angeordnet, welche der Sensoroberfläche des Grundkörpers 2 gegenüberliegend angeordnet ist. In dem Grundkörper 2 wird somit ausgehend von der Wärmequelle 7 in bis zu der Sensoroberfläche 3 ein erster Wärmepfad bereitgestellt, der den primären Wärmestrom leitet, vgl. Fig. 2.

Die Detektionsvorrichtung 1 umfasst ferner einen Hüllkörper 19, der den Grundkörper 2 an seiner Umfangsseite sowie der Stirnseite, die der Sensoroberfläche 3 gegenüberliegt, umhüllt. Insofern wird der Bereich des Grundkörpers 2, der im Außenbereich 26 angeordnet ist, von dem Hüllkörper 19 umhüllt und lediglich der Detektionsabschnitt 25 freigegeben. Der Hüllkörper 19 kann beispielsweise aus einem Metall, insbesondere Titan, ausgestaltet sein. Über den Hüllkörper 19 wird ein zweiter Wärmepfad bereitgestellt, den sekundären Wärmestrom Q2 führt, welcher ausgehend von der Wärmequelle 7 durch den Hüllkörper 19 bis zu der Referenzoberfläche 21 des Hüllkörpers 19 verläuft, vgl. Fig. 2.

Zwischen dem Grundkörper 2 und dem Hüllkörper 19 ist eine Isolationseinrichtung 9 angeordnet. Diese ist als Schüttung oder als poröses Material ausgebildet. Alternativ kann die Isolationseinrichtung 9 ein Gas oder Gasgemisch, beispielsweise Luft, umfassen. Die Außenkontur des Hüllkörpers 19 ist zur Umgebung durch eine Außenisolation 22 isoliert. Die Außenisolation weist einen Isolatorkörper auf, der beispielsweise aus Glaswolle ausgebildet ist.

Für die in Fig. 2 gezeigte Detektionsvorrichtung 1 gelten folgende Zusammenhänge, wobei die Heizeinrichtung 7 eine Leistung P und eine Temperatur $T_H$ aufweist und das strömende Medium 40 eine Temperatur $T_W$:

$$(1) \qquad P = \dot{Q}_1 + \dot{Q}_2$$

$$(2) \qquad \Delta T_{HW} = T_H - T_W$$

$$(3) \qquad R_{th1} = \frac{\Delta T}{\dot{Q}_1}$$

$$(4) \qquad R_{th2} = \frac{\Delta T}{\dot{Q}_2}$$

$$(5) \qquad \dot{Q}_1 = \frac{P\,R_{th2}}{R_{th1}+R_{th2}}$$

$$(6) \qquad \dot{Q}_2 = \frac{P\,R_{th1}}{R_{th1}+R_{th2}}$$

$$(7) \qquad R_{th1} = R_{1A} + R_{1B} + R_{1C} + R_{1F}$$

$$(8) \qquad R_{th2} = R_{2A} + R_{2B} + R_{2C} + R_{2F}$$

$P$ ... Heizleistung der Heizeinrichtung 7
$Q_1$ ... Wärmestrom Pfad 1
$Q_2$ ... Wärmestrom Pfad 1
$T_H$ ... Temperatur der Heizeinrichtung 7
$T_W$ ... Temperatur des strömenden Mediums 40
$\Delta T_{HW}$ ... Temperaturdifferenz Heizeinrichtung 7 zu dem strömenden Medium 40
$R_{th1}$ ... absoluter Wärmewiderstand Pfad 1
$R_{th2}$ ... absoluter Wärmewiderstand Pfad 2
$R_{1A}$ ... Wärmewiderstand Pfad 1 Messstab
$R_{1B}$ ... Wärmewiderstand Pfad 1 Kontaktplatte
$R_{1C}$ ... Wärmewiderstand Pfad 1 Übergang zum strömenden Medium 40
$R_{1F}$ ... Wärmewiderstand Pfad 1 Ablagerung (Fouling)
$R_{2A}$ ... Wärmewiderstand Pfad 2 Innenisolierung
$R_{2B}$ ... Wärmewiderstand Pfad 2 Gehäusehülse
$R_{2C}$ ... Wärmewiderstand Pfad 2 Übergang zum strömenden Medium 40
$R_{2F}$ ... Wärmewiderstand Pfad 2 Ablagerung (Fouling)

Für die Messstrecke mit dem Wärmestrom Q1 und den Messpunkten $P_1$ (erster Temperatursensor 4 mit der Temperatur $T_1$) und $P_2$ (zweiter Temperatursensor 5 mit der Temperatur $T_2$) gilt:

$$(9) \qquad T_2 - T_1 = \Delta T_{12} = R_{1A\_12} * \dot{Q}_1$$

$T_1$ ... Temperatur des Grundkörpers 2 an Punkt $P_1$
$T_2$ ... Temperatur des Grundkörpers 2 an Punkt $P_2$
$\Delta T_{12}$ ... Temperaturdifferenz zwischen Punkten $P_1$ und $P_2$
$R_{1A\_12}$ ... Wärmewiderstand im primären Wärmepfad 1 zwischen Punkten $P_1$ und $P_2$

Ein Maß für die Menge bzw. Dicke der Ablagerungen und/oder Verschmutzungen ist der Performance loss PFL in %. Dieser ist definiert für Messungen ohne Ablagerungen (Kalibrierung=cal) und aktuelle Messungen (*act*) nach:

$$(10) \quad PFL = \left(1 - \frac{\Delta T_{12\_act}}{\Delta T_{12\_cal}}\right) * 100\%$$

$\Delta T_{12\_act}$ ... aktuell gemessene Temperaturdifferenz
$\Delta T_{12\_cal}$ ... während der Kalibrierung (ohne Ablagerung) gemessene Temperaturdifferenz

Aus (10) ergibt sich unter Benutzung von (9) ($R_{1A\_12}$ ist unveränderlich):

$$(11) \quad PFL = \left(1 - \frac{\dot{Q}_{1\_act}}{\dot{Q}_{1\_cal}}\right) * 100\%$$

und mit (5)

$$(12) \quad PFL = \left(1 - \frac{R_{th2\_act}*(R_{th1\_cal}+R_{th2_{cal}})}{R_{th2\_cal}*(R_{th1_{act}}+R_{th2_{act}})}\right) * 100\%$$

Unter der Voraussetzung, dass der Wärmewiderstand im primären Wärmepfad kleiner als ist als im sekundären Wärmepfad und die Widerstandserhöhung durch Ablagerungen kleiner ist als der Widerstand des primären Wärmepfads

$$(13) \quad R_{th2\_cal} > R_{th1\_cal} > R_{1F}, R_{2F}$$

gilt näherungsweise:

$$(14) \quad R_{th2\_act} \cong R_{th2\_cal}$$

Somit ergibt sich aus (12):

$$(15) \quad PFL = \left(1 - \frac{(R_{th1\_cal}+R_{th2_{cal}})}{(R_{th1_{act}}+R_{th2_{act}})}\right) * 100\% = \left(\frac{R_{th1\_act}-R_{th1\_cal}}{R_{th1_{act}}+R_{th2\_act}}\right) * 100\%$$

Da gilt:

$$(16) \quad R_{1A}, R_{2A}, R_{1B}, R_{2B} = const$$

folgt unter der Annahme:

$$(17) \quad R_{1C\_act} \cong R_{1C_{cal}} \cong const \qquad R_{2C\_act} \cong R_{2C\_cal} \cong const$$

mit (7), (8), (15):

$$(18) \quad PFL = \left(\frac{R_{1F\_act}}{R_{th1_{act}}+R_{th2_{act}}}\right) * 100\%$$

und mit (13)

$$(19) \quad PFL \cong K * R_{1F\_act} * 100\%$$

K ... Sensorkonstante
Somit ist das Maß PFL (der perfomance loss) proportional zu dem Wärmewiderstand der Ablagerungen im primären Wärmepfad:

$$(20) \quad PFL \sim R_{1F_{act}}$$

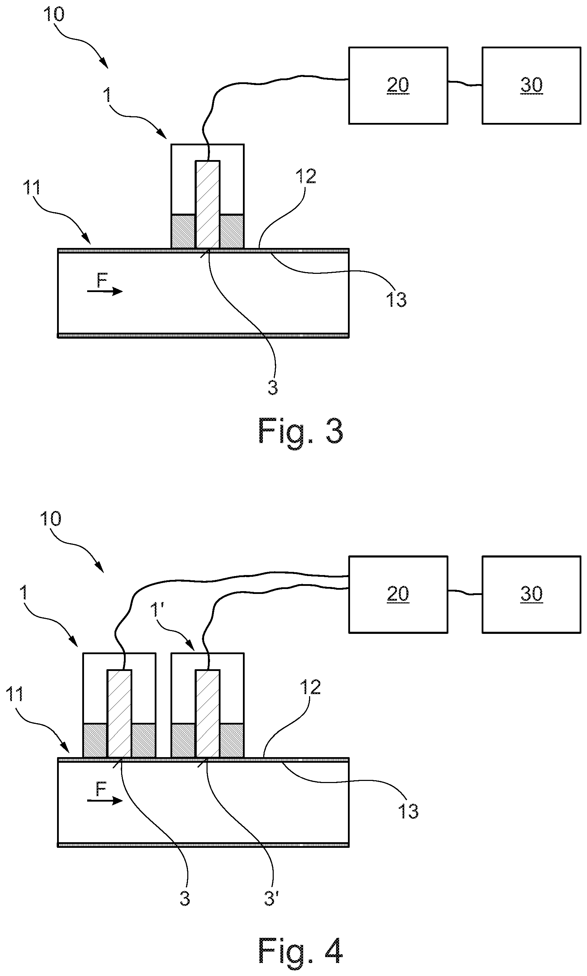

In **Fig.** 3 ist ein Ausführungsbeispiel einer Detektionsanordnung 10 zur Detektion von Ablagerungen eines strömenden Mediums an einer Innenwandung 12 eines Prozessgefäßes oder einer Prozessleitung 11 gezeigt. Die Detektionsanordnung 10 umfasst eine Detektionsvorrichtung 1, die nach dem in Fig. 1 und 2 gezeigten Ausführungsbeispiel ausgestaltet sein kann. In der Innenwandung 12 der Leitung 11 ist eine Ausnehmung vorgesehen, in welche die Detektionsvorrichtung 1 mit ihrem Detektionsabschnitt 25 hineinragt, so dass die Sensoroberfläche 3 und die Referenzoberfläche 21 als Teil der Innenwandung 12 der Prozessleitung 11 vorgesehen sind. In der Leitung 11 wird ein Kühl- oder Prozessmedium in einer Förderrichtung F gefördert. Dabei bilden sich Ablagerungen 13 an der Innenwandung 12 und Ablagerungen 13 an der Sensoroberfläche 3, welche mit den Ablagerungen 13 auf der Innenwandung 12 korreliert werden können, aus, die mit der Detektionsvorrichtung 1 erkannt werden können.

Die Wärmequelle 7 der Detektionsvorrichtung 1 wird mit einer konstanten Heizleistung betrieben, um dadurch einen Temperaturgradient zwischen dem ersten Temperatursensor 4 und zweiten Temperatursensor 5 erzeugt. Zum Überwachen der Ablagerungen 13 wird mit dem ersten Temperatursensor 4 der Detektionsvorrichtung 1 eine erste Temperatur und mit dem zweiten Temperatursensor 5 der Detektionsvorrichtung 1 eine zweite Temperatur gemessen. In der mit der Detektionsvorrichtung 1 verbundenen Auswerteeinheit 20 wird das oben beschriebene Maß PFL berechnet. Dieses Maß PFL ist proportional zur Dicke der Ablagerungen an der Innenwandung 12. Die Auswerteeinheit 20 berechnet diese Dicke und kann diese über eine Schnittstelle 30 an ein übergeordnetes System, beispielsweise eine Prozessleitanlage weiterleiten.

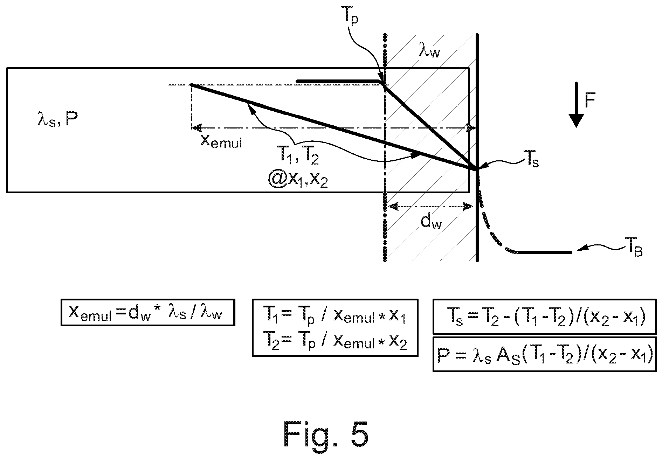

Gemäß einer Abwandlung des in Fig. 3 gezeigten Ausführungsbeispiels ist die Detektionsvorrichtung 1 in einer mit einem flüssigen Kühlmedium gefüllten Zu- oder Ableitung 11 eines Wärmetauschers angeordnet, wobei der Wärmetauscher einen Wärmeaustausch durch eine Wärmetauscher-Wandung zwischen einem Prozessmedium und dem Kühlmedium ermöglicht, wobei eine Heizleistung der Wärmequelle bzw. eine Kühlleistung der Kältequelle in Abhängigkeit von einer Prozesstemperatur des Prozessmediums einstellt wird. Auf diese Weise können durch das flüssige Kühlmedium hervorgerufene Ablagerungen an einer Wandung des Wärmetauschers bestimmt werden, ohne dass es dazu erforderlich ist, die Detektionsvorrichtung innerhalb des Wärmetauschers anzuordnen. Insofern handelt es sich um eine Emulation der Vorgänge an der Wandung des Wärmetauschers mittels der Detektionsvorrichtung. Die Emulation ist grafisch in **Fig. 5** zusammengefasst und basiert darauf, dass die Prozesstemperatur $T_P$, die Wärmeleitfähigkeit $\lambda_w$ der Wärmetauscher-Wandung und die Wandstärke $d_w$ der Wärmetauscher-Wandung bekannt sind. Ausgehend von diesen Parameter des Wärmetauschers und des Prozesses wird ein virtueller Abstand $x_{emul}$ in dem Grundkörper 2 der Detektionseinrichtung 1 von der Sensoroberfläche 3 bestimmt, bei welchem die Prozesstemperatur anliegen muss, um an der Sensoroberfläche 3 im Wesentlichen dieselbe Temperatur einzustellen wie an der mit dem strömenden Kühlmedium in Kontakt stehenden Oberfläche der Wärmetauscher-Wandung. Der virtuelle Abstand $x_{emul}$ berechnet sich wie folgt:

$$x_{emul} = d_w \cdot \lambda_s / \lambda_w$$

Die Heizleistung P Wärmequelle 7 wird in Abhängigkeit von den mit dem ersten und zweiten Temperatursensor 4, 5 ermitteln Temperaturen $T_1$, $T_2$ derart eingestellt, dass in dem virtuellen Abstand $x_{emul}$ von der Sensoroberfläche 3 die Prozesstemperatur $T_P$ erreicht wird. Die Heizleistung P der Wärmequelle 7 ergibt sich zu

$$P = \lambda_s A_s \left( T_1 - T_2 \right) / (x_2 - x_1)$$

wobei

$\lambda_s$: Wärmeleitfähigkeit des Grundkörpers der Detektionsvorrichtung
$A_s$: Querschnittsfläche des Grundkörpers der Detektionsvorrichtung
$T_1$: erste Temperatur
$T_2$: zweite Temperatur
$x_1$: erster Abstand (Ort des ersten Temperatursensors)
$x_2$: zweite Abstand (Ort des zweiten Temperatursensors)

Dabei werden für die erste Temperatur $T_1$ und die zweite Temperatur $T_2$ folgende Sollwerte in Abhängigkeit von dem virtuellen Abstand $x_{emul}$, den Abständen $x_1$, $x_2$ der Temperatursensoren von der Sensorfläche und der vorgegebenen Prozesstemperatur $T_P$ vorgegeben:

$$T_1 = T_P / x_{emul} \cdot x_1$$

$$T_2 = T_P / x_{emul} \cdot x_2$$

Die Darstellung in **Fig. 4** zeigt ein weiteres Ausführungsbeispiel einer Detektionsanordnung 10 zur Detektion von Ablagerungen eines Prozessmediums an einer Innenwandung 12 eines Gefäßes oder einer Leitung 11, welches im Wesentlichen dem in Fig. 3 gezeigten entspricht. Im Unterschied zu der Detektionseinrichtung nach Fig. 3 sind bei diesem Ausführungsbeispiel mehrere, hier genau zwei, Detektionsvorrichtungen 1, 1' vorgesehen und derart an der Leitung 11 angeordnet, dass die jeweilige Sensoroberfläche 3, 3' der Detektionsvorrichtung 1, 1' als Teil der Innenwandung 12 der Leitung 11 vorgesehen ist. Durch die beiden Detektionsvorrichtung 1, 1' ist es möglich, verschiedene Ablagerungen und/oder Verschmutzungen voneinander zu unterscheiden und ggf. durch unterschiedliche Maßnahmen zu bekämpfen. Wird beispielsweise die erste Oberflächentemperatur der ersten Sensoroberfläche 3 im Bereich zwischen 35°C und 40°C, insbesondere auf 37°C, eingestellt, so lagern sich auf der ersten Sensoroberfläche 3 vermehrt organische Ablagerungen und/oder Verschmutzungen an. Wird die zweite Oberflächentemperatur der zweiten Sensoroberfläche 3' im Bereich zwischen 45°C und 55°C, insbesondere auf 50 °C, eingestellt, so lagern sich auf der zweiten Sensoroberfläche 3' vermehrt anorganische Ablagerungen und/oder Verschmutzungen ab.

Durch einen Vergleich der von den beiden Detektionsvorrichtungen 1, 1' erfassten Temperaturdifferenzen, beispielsweise in der Auswerteeinheit 20, kann auf die Zusammensetzung der in der Leitung 11 gebildeten Ablagerungen 13 geschlossen werden. Anhand dieser Erkenntnisse kann eine Zusammensetzung von Additiven ermittelt werden, die zum Abbau der Ablagerungen 13 in die Leitung 11 geleitet werden.

Beispielsweise kann eine erste Temperaturdifferenz mit der ersten Detektionsvorrichtung 1 ermittelt und ein erstes Additiv in Abhängigkeit von der ermittelten ersten Temperaturdifferenz in die Leitung 11 eingeleitet und eine zweite Temperaturdifferenz mit der zweiten Detektionsvorrichtung 1' ermittelt und ein zweites Additiv in Abhängigkeit von der ermittelten zweiten Temperaturdifferenz in die Leitung 11 eingeleitet werden.

Mit den vorstehend beschriebenen Detektionsvorrichtungen 1, 1' kann ein Verfahren zum Detektieren von Ablagerungen und/oder Verschmutzungen auf einer Sensoroberfläche 3 innerhalb eines Gefäßes oder einer Leitung 11 mit einem strömenden Medium 40, mit einer ersten Detektionsvorrichtung 1 durchgeführt werden, die umfasst:

- einen wärmeleitfähigen Grundkörper 2, der die Sensoroberfläche 3 aufweist oder mit dieser in direktem Kontakt steht,
- eine an dem Grundkörper 2 angeordnete Wärme- oder Kältequelle 7, die einen primären Wärmestroms Q1 zwischen der Wärme- oder Kältequelle 7 und der Sensoroberfläche 3 sowie einen sekundären Wärmestroms Q2 zwischen der Wärme- oder Kältequelle 7 und einer Referenzoberfläche 21 erzeugt,
- einen Detektionsabschnitt, der die Sensoroberfläche 3 und die Referenzoberfläche 21 aufweist und innerhalb des Gefäßes oder innerhalb der Leitung in Kontakt mit dem strömenden Medium 40 angeordnet ist,
- einen wärmeleitfähigen Hüllkörper 19, der einen außerhalb des Detektionsabschnitts angeordneten Teil des Grundkörpers 2 umhüllt und die Referenzoberfläche 21 aufweist,
- eine Außenisolation 22, die den Hüllkörper 19 gegenüber seiner äußeren Umgebung isoliert, und
- einen ersten Temperatursensor 4, der in einem ersten Abstand von der Sensoroberfläche 3 an dem Grundkörper 2 angeordnet ist, und einen zweiten Temperatursensor 5, der in einem zweiten Abstand von Sensoroberfläche 3 an dem Grundkörper 2 angeordnet ist, wobei der zweite Abstand größer ist als der erste Abstand,

wobei mittels der Temperatursensoren 4, 5 der ersten Detektionsvorrichtung 1 eine Temperaturdifferenz bestimmt wird und anhand der Temperaturdifferenz Ablagerungen und/oder Verschmutzungen auf einer Sensoroberfläche detektiert werden.

**Bezugszeichenliste**

| 1 | Detektionsvorrichtung |
|---|---|
| 2 | Grundkörper |
| 3 | Sensoroberfläche |
| 4 | Temperatursensor |
| 5 | Temperatursensor |
| 6 | Temperatursensor |
| 7 | Wärmequelle |
| 8 | Isoliereinrichtung |
| 9 | Isoliereinrichtung |
| 10 | Detektionsanordnung |
| 11 | Leitung |

EP 4 526 649 B1

12 Wandung
13 Ablagerung
18 Durchgangsbohrung
19 Hüllkörper
20 Auswerteeinheit
21 Referenzoberfläche
22 Außenisolation
25 Detektionsabschnitt (Innenabschnitt)
26 Außenabschnitt
30 Schnittstelle
40 strömendes Medium (Flüssigkeit)
F Förderrichtung
$Q_1$ primärer Wärmestrom
$Q_2$ sekundärer Wärmestrom

**Patentansprüche**

1. Detektionsvorrichtung (1) zum Detektieren von Ablagerungen und/oder Verschmutzungen auf einer Sensoroberfläche (3) innerhalb eines Gefäßes oder einer Leitung mit einem strömenden Medium (40), wobei die Detektionsvorrichtung (1) umfasst:

   - einen Detektionsabschnitt, der die Sensoroberfläche (3) aufweist und dazu eingerichtet ist, innerhalb des Gefäßes oder innerhalb der Leitung in Kontakt mit dem strömenden Medium (40) angeordnet zu werden,
   - einen wärmeleitfähigen Grundkörper (2), der die Sensoroberfläche (3) aufweist oder mit dieser in direktem Kontakt steht,
   - eine an dem Grundkörper (2) angeordnete Wärme- oder Kältequelle (7) zur Erzeugung eines primären Wärmestroms (Q1) zwischen der Wärme- oder Kältequelle (7) und der Sensoroberfläche (3) sowie eines sekundären Wärmestroms (Q2) zwischen der Wärme- oder Kältequelle (7) und einer Referenzoberfläche (21),
   - einen ersten Temperatursensor (4), der in einem ersten Abstand von der Sensoroberfläche (3) an dem Grundkörper (2) angeordnet ist, und einen zweiten Temperatursensor (5), der in einem zweiten Abstand von Sensoroberfläche (3) an dem Grundkörper (2) angeordnet ist, wobei der zweite Abstand größer ist als der erste Abstand, wobei mittels der Temperatursensoren (4, 5) eine Temperaturdifferenz bestimmbar ist,
   - einen wärmeleitfähigen Hüllkörper (19), der einen außerhalb des Detektionsabschnitts angeordneten Teil des Grundkörpers (2) umhüllt und die Referenzoberfläche (21) aufweist,

   **dadurch gekennzeichnet, dass**
   die Referenzoberfläche (21) Teil des Detektionsabschnitts ist und die Detektionsvorrichtung (1) eine Außenisolation (22) umfasst, die den Hüllkörper (19) gegenüber seiner äußeren Umgebung isoliert.

2. Detektionsvorrichtung (1) nach Anspruch 1, **dadurch gekennzeichnet, dass** die Außenisolation (22) den Hüllkörper (19) derart gegenüber seiner äußeren Umgebung isoliert, dass der sekundäre Wärmestrom größer ist als ein parasitärer Wärmestrom zwischen der Wärme- oder Kältequelle und der Umgebung durch den Hüllkörper (19) und durch die Außenisolation (22).

3. Detektionsvorrichtung (1) nach einem der vorhergehenden Ansprüche, **dadurch gekennzeichnet, dass** der Hüllkörper (19) aus einem Metall, insbesondere aus Titan, ausgebildet ist.

4. Detektionsvorrichtung (1) nach einem der vorhergehenden Ansprüche, **dadurch gekennzeichnet, dass** die Wärmequelle (7) oder Kältequelle als einstellbare Wärmequelle oder Kältequelle ausgebildet ist.

5. Detektionsvorrichtung (1) nach einem der vorhergehenden Ansprüche, **dadurch gekennzeichnet, dass** der Grundkörper (2) stabförmig ist, insbesondere mit einem runden Querschnitt.

6. Detektionsvorrichtung (1) nach einem der vorhergehenden Ansprüche, **dadurch gekennzeichnet, dass** der Grundkörper (2) hinsichtlich seiner Wärmeleitfähigkeit isotrop und homogen ist.

7. Detektionsvorrichtung (1) nach einem der vorhergehenden Ansprüche, **dadurch gekennzeichnet, dass** die Detektionsvorrichtung (1) einen dritten Temperatursensor (6) umfasst, der in einem dritten Abstand von der Sensor-

**14**

oberfläche (3) an dem Grundkörper (2) angeordnet ist, wobei der dritte Abstand größer ist als der zweite Abstand.

8. Detektionsvorrichtung (1) nach einem der vorhergehenden Ansprüche, **dadurch gekennzeichnet, dass** die Wärmequelle (7) in einem vierten Abstand von der Sensoroberfläche (3) angeordnet ist, wobei der vierte Abstand größer ist als der zweite Abstand, ggf. größer ist als der der dritte Abstand.

9. Detektionsvorrichtung (1) nach einem der vorhergehenden Ansprüche, **dadurch gekennzeichnet, dass** die Detektionsvorrichtung (1) eine den Grundkörper (2) umgebende Isolationseinrichtung (8, 9) umfasst, die zwischen einer Außenkontur des Grundkörpers (2) und einer Innenkontur des Hüllkörpers (19) angeordnet ist, wobei bevorzugt die den Grundkörper (2) umgebende Isolationseinrichtung (8) an allen Seiten des Grundkörpers (2) einen identischen Wärmewiderstand aufweist.

10. Detektionsanordnung (10) zur Detektion von Ablagerungen und/oder Verschmutzungen eines strömenden Mediums (40) an einer Wandung (12) eines Gefäßes oder einer Leitung (11) mit einer Detektionsvorrichtung (1) nach einem der vorhergehenden Ansprüche, wobei der Detektionsabschnitt, der die Sensoroberfläche (3) und die Referenzoberfläche (21) aufweist, als Teil der Wandung (12) vorgesehen ist.

11. Verfahren zum Detektieren von Ablagerungen und/oder Verschmutzungen auf einer Sensoroberfläche (3) innerhalb eines Gefäßes oder einer Leitung (11) mit einem strömenden Medium (40), mit einer ersten Detektionsvorrichtung (1), die umfasst:

- einen wärmeleitfähigen Grundkörper (2), der die Sensoroberfläche (3) aufweist oder mit dieser in direktem Kontakt steht,
- eine an dem Grundkörper (2) angeordnete Wärme- oder Kältequelle (7), die einen primären Wärmestroms (Q1) zwischen der Wärme- oder Kältequelle (7) und der Sensoroberfläche (3) sowie einen sekundären Wärmestroms (Q2) zwischen der Wärme- oder Kältequelle (7) und einer Referenzoberfläche (21) erzeugt,
- einen Detektionsabschnitt, der die Sensoroberfläche (3) und die Referenzoberfläche (21) aufweist und innerhalb des Gefäßes oder innerhalb der Leitung in Kontakt mit dem strömenden Medium (40) angeordnet ist,
- einen wärmeleitfähigen Hüllkörper (19), der einen außerhalb des Detektionsabschnitts angeordneten Teil des Grundkörpers (2) umhüllt und die Referenzoberfläche (21) aufweist,
- eine Außenisolation (22), die den Hüllkörper (19) gegenüber seiner äußeren Umgebung isoliert, und
- einen ersten Temperatursensor (4), der in einem ersten Abstand von der Sensoroberfläche (3) an dem Grundkörper (2) angeordnet ist, und einen zweiten Temperatursensor (5), der in einem zweiten Abstand von Sensoroberfläche (3) an dem Grundkörper (2) angeordnet ist, wobei der zweite Abstand größer ist als der erste Abstand,

wobei mittels der Temperatursensoren (4, 5) der ersten Detektionsvorrichtung (1) eine Temperaturdifferenz bestimmt wird und anhand der Temperaturdifferenz Ablagerungen und/oder Verschmutzungen auf einer Sensoroberfläche detektiert werden.

12. Verfahren nach Anspruch 11, **dadurch gekennzeichnet, dass** die Wärmequelle (7) mit einer konstanten Heizleistung betrieben wird oder die Kältequelle mit einer konstanten Kühlleistung betrieben wird.

13. Verfahren nach Anspruch 11, **dadurch gekennzeichnet, dass** eine Heizleistung der Wärmequelle (7) bzw. eine Kühlleistung der Kältequelle in Abhängigkeit von einer Temperatur des strömenden Mediums (40) eingestellt wird.

14. Verfahren nach Anspruch 11, **dadurch gekennzeichnet, dass** die erste Detektionsvorrichtung (1) in einer mit einem strömenden Kühlmedium (40) gefüllten Zu- oder Ableitung eines Wärmetauschers angeordnet ist, wobei der Wärmetauscher einen Wärmeaustausch durch eine Wärmetauscher-Wandung zwischen einem Prozessmedium und dem Kühlmedium (40) ermöglicht, wobei eine Heizleistung der Wärmequelle (7) bzw. eine Kühlleistung der Kältequelle in Abhängigkeit von einer Prozesstemperatur des Prozessmediums einstellt wird.

15. Verfahren nach einem der Ansprüche 11 bis 14, **dadurch gekennzeichnet, dass** eine Temperaturdifferenz zwischen der ersten und zweiten Temperatur ermittelt wird und in Abhängigkeit von der ermittelten Temperaturdifferenz ein Additiv in das Prozessgefäß oder in die Prozessleitung (11) eingeleitet wird.

Claims

1. A detection device (1) for detecting deposits and/or contamination on a sensor surface (3) within a vessel or a conduit containing a flowing medium (40), wherein the detection device (1) comprises:

   - a detection section comprising the sensor surface (3) and configured to be arranged within the vessel or within the conduit in contact with the flowing medium (40),
   - a thermally conductive base body (2) that includes the sensor surface (3) or is in direct contact with it,
   - a heat or cold source (7) arranged on the base body (2) for generating a primary heat flow (Q1) between the heat or cold source (7) and the sensor surface (3) as well as a secondary heat flow (Q2) between the heat or cold source (7) and a reference surface (21),
   - a first temperature sensor (4) arranged on the base body (2) at a first distance from the sensor surface (3), and a second temperature sensor (5), which is arranged on the base body (2) at a second distance from the sensor surface (3), wherein the second distance is greater than the first distance, wherein a temperature difference can be determined by means of the temperature sensors (4, 5),
   - a thermally conductive sheath (19) that encloses a portion of the base body (2) located outside the detection section and includes the reference surface (21),

   **characterized in that**
   the reference surface (21) is part of the detection section, and the detection device (1) comprises an outer insulation (22) that insulates the sheath (19) from its external environment.

2. Detection device (1) according to claim 1, **characterized in that** the outer insulation (22) insulates the sheath (19) from its external environment such that the secondary heat flow is greater than a parasitic heat flow between the heat or cold source and the environment through the sheath (19) and through the outer insulation (22).

3. Detection device (1) according to one of the preceding claims, **characterized in that** the sheath (19) is made of a metal, in particular titanium.

4. Detection device (1) according to one of the preceding claims, **characterized in that** the heat source (7) or cold source is designed as an adjustable heat source or cold source.

5. Detection device (1) according to one of the preceding claims, **characterized in that** the base body (2) is rod-shaped, in particular with a round cross-section.

6. Detection device (1) according to one of the preceding claims, **characterized in that** the base body (2) is isotropic and homogeneous with respect to its thermal conductivity.

7. Detection device (1) according to one of the preceding claims, **characterized in that** the detection device (1) comprises a third temperature sensor (6) arranged on the base body (2) at a third distance from the sensor surface (3), wherein the third distance is greater than the second distance.

8. Detection device (1) according to one of the preceding claims, **characterized in that** the heat source (7) is arranged at a fourth distance from the sensor surface (3), wherein the fourth distance is greater than the second distance and, if applicable, greater than the third distance.

9. Detection device (1) according to one of the preceding claims, **characterized in that** the detection device (1) comprises an insulation device (8, 9) arranged between an outer contour of the base body (2) and an inner contour of the sheath (19), wherein preferably the insulation device (8) surrounding the base body (2) has an identical thermal resistance on all sides of the base body (2).

10. Detection assembly (10) for detecting deposits and/or contamination of a flowing medium (40) on a wall (12) of a vessel or a pipe (11), comprising a detection device (1) according to any one of the preceding claims, wherein the detection section, which comprises the sensor surface (3) and the reference surface (21), is provided as part of the wall (12).

11. A method for detecting deposits and/or contamination on a sensor surface (3) within a vessel or a conduit (11) containing a flowing medium (40), using a first detection device (1) comprising:

- a thermally conductive base body (2) that comprises the sensor surface (3) or is in direct contact with it,
- a heat or cold source (7) arranged on the base body (2), which generates a primary heat flow (Q1) between the heat or cold source (7) and the sensor surface (3) as well as a secondary heat flow (Q2) between the heat or cold source (7) and a reference surface (21),
- a detection section comprising the sensor surface (3) and the reference surface (21) and arranged within the vessel or within the pipe in contact with the flowing medium (40),
- a thermally conductive sheath (19) that encloses a portion of the base body (2) located outside the detection section and includes the reference surface (21),
- an outer insulation (22) that insulates the sheath (19) from its external environment, and
- a first temperature sensor (4) arranged on the base body (2) at a first distance from the sensor surface (3), and a second temperature sensor (5) arranged on the base body (2) at a second distance from the sensor surface (3), wherein the second distance is greater than the first distance,

wherein a temperature difference is determined by means of the temperature sensors (4, 5) of the first detection device (1), and deposits and/or contamination on a sensor surface are detected based on the temperature difference.

12. Method according to claim 11, **characterized in that** the heat source (7) is operated at a constant heating capacity or the cooling source is operated at a constant cooling capacity.

13. Method according to claim 11, **characterized in that** a heating capacity of the heat source (7) or a cooling capacity of the cooling source is adjusted as a function of a temperature of the flowing medium (40).

14. Method according to claim 11, **characterized in that** the first detection device (1) is arranged in a supply or discharge line of a heat exchanger filled with a flowing cooling medium (40), wherein the heat exchanger enables heat exchange through a heat exchanger wall between a process medium and the cooling medium (40), wherein a heating capacity of the heat source (7) or a cooling capacity of the cooling source is adjusted as a function of a process temperature of the process medium.

15. Method according to any one of claims 11 through 14, **characterized in that** a temperature difference between the first and second temperatures is determined, and an additive is introduced into the process vessel or into the process line (11) based on the determined temperature difference.

**Revendications**

1. Dispositif de détection (1) destiné à détecter des dépôts et/ou des salissures sur une surface de capteur (3) à l'intérieur d'un récipient ou d'une conduite avec un fluide en écoulement (40), le dispositif de détection (1) comprenant :

- une partie de détection qui comporte la surface de capteur (3) et qui est agencée pour être disposée à l'intérieur du récipient ou à l'intérieur de la conduite en contact avec le fluide en écoulement (40),
- un corps de base thermoconducteur (2) qui comporte la surface de capteur (3) ou est en contact direct avec celle-ci,
- une source de chaleur ou de froid (7) disposée sur le corps de base (2) pour générer un flux thermique primaire (Q1) entre la source de chaleur ou de froid (7) et la surface de capteur (3) ainsi qu'un flux thermique secondaire (Q2) entre la source de chaleur ou de froid (7) et une surface de référence (21),
- un premier capteur de température (4) disposé sur le corps de base (2) à une première distance de la surface de détection (3), et un deuxième capteur de température (5), disposé sur le corps de base (2) à une deuxième distance de la surface de détection (3), la deuxième distance étant supérieure à la première distance, une différence de température pouvant être déterminée à l'aide des capteurs de température (4, 5),
- un corps d'enveloppe thermoconducteur (19) qui enveloppe une partie du corps de base (2) disposée à l'extérieur de la section de détection et qui présente la surface de référence (21),

**caractérisé en ce que**
la surface de référence (21) fait partie de la section de détection et le dispositif de détection (1) comprend une isolation extérieure (22) qui isole l'enveloppe (19) de son environnement extérieur.

2. Dispositif de détection (1) selon la revendication 1, **caractérisé en ce que** l'isolation extérieure (22) isole le corps d'enveloppe (19) de son environnement extérieur de telle sorte que le flux thermique secondaire soit supérieur à un flux thermique parasite entre la source de chaleur ou de froid et l'environnement à travers le corps d'enveloppe (19) et à travers l'isolation extérieure (22).

3. Dispositif de détection (1) selon l'une des revendications précédentes, **caractérisé en ce que** le corps d'enveloppe (19) est réalisé en un métal, en particulier en titane.

4. Dispositif de détection (1) selon l'une des revendications précédentes, **caractérisé en ce que** la source de chaleur (7) ou la source de froid est conçue comme une source de chaleur ou une source de froid réglable.

5. Dispositif de détection (1) selon l'une des revendications précédentes, **caractérisé en ce que** le corps de base (2) est en forme de tige, en particulier avec une section transversale ronde.

6. Dispositif de détection (1) selon l'une des revendications précédentes, **caractérisé en ce que** le corps de base (2) est isotrope et homogène en ce qui concerne sa conductivité thermique.

7. Dispositif de détection (1) selon l'une des revendications précédentes, **caractérisé en ce que** le dispositif de détection (1) comprend un troisième capteur de température (6) qui est disposé sur le corps de base (2) à une troisième distance de la surface du capteur (3), la troisième distance étant supérieure à la deuxième distance.

8. Dispositif de détection (1) selon l'une des revendications précédentes, **caractérisé en ce que** la source de chaleur (7) est disposée à une quatrième distance de la surface du capteur (3), la quatrième distance étant supérieure à la deuxième distance, le cas échéant supérieure à la troisième distance.

9. Dispositif de détection (1) selon l'une des revendications précédentes, **caractérisé en ce que** le dispositif de détection (1) comprend un dispositif d'isolation (8, 9) qui est disposé entre un contour extérieur du corps de base (2) et un contour intérieur du corps d'enveloppe (19), le dispositif d'isolation (8) entourant le corps de base (2) présentant de préférence une résistance thermique identique sur tous les côtés du corps de base (2).

10. Agencement de détection (10) destiné à détecter des dépôts et/ou des salissures d'un fluide en écoulement (40) sur une paroi (12) d'un récipient ou d'une conduite (11), comprenant un dispositif de détection (1) selon l'une des revendications précédentes, la section de détection, qui comprend la surface de capteur (3) et la surface de référence (21), étant prévue comme partie de la paroi (12).

11. Procédé de détection de dépôts et/ou d'encrassements sur une surface de capteur (3) à l'intérieur d'un récipient ou d'une conduite (11) dans lequel s'écoule un fluide (40), comprenant un premier dispositif de détection (1) qui comprend :

    - un corps de base thermoconducteur (2) qui comporte la surface de capteur (3) ou est en contact direct avec celle-ci,
    - une source de chaleur ou de froid (7) disposée sur le corps de base (2), qui génère un flux thermique primaire (Q1) entre la source de chaleur ou de froid (7) et la surface de capteur (3) ainsi qu'un flux thermique secondaire (Q2) entre la source de chaleur ou de froid (7) et une surface de référence (21),
    - une section de détection qui comporte la surface de capteur (3) et la surface de référence (21) et qui est disposée à l'intérieur du récipient ou à l'intérieur de la conduite en contact avec le fluide en écoulement (40),
    - un corps d'enveloppe thermoconducteur (19) qui enveloppe une partie du corps de base (2) disposée à l'extérieur de la section de détection et qui comporte la surface de référence (21),
    - une isolation extérieure (22) qui isole le corps d'enveloppe (19) de son environnement extérieur, et
    - un premier capteur de température (4), qui est disposé sur le corps de base (2) à une première distance de la surface de détection (3), et un deuxième capteur de température (5), qui est disposé sur le corps de base (2) à une deuxième distance de la surface de détection (3), la deuxième distance étant supérieure à la première distance,

une différence de température étant déterminée au moyen des capteurs de température (4, 5) du premier dispositif de détection (1) et des dépôts et/ou des salissures sur une surface de capteur étant détectés à partir de cette différence de température.

12. Procédé selon la revendication 11, **caractérisé en ce que** la source de chaleur (7) fonctionne à une puissance de chauffage constante ou la source de froid fonctionne à une puissance de refroidissement constante.

**13.** Procédé selon la revendication 11, **caractérisé en ce qu'**une puissance de chauffage de la source de chaleur (7) ou une puissance de refroidissement de la source de froid est réglée en fonction d'une température du fluide en circulation (40).

**14.** Procédé selon la revendication 11, **caractérisé en ce que** le premier dispositif de détection (1) est disposé dans une conduite d'alimentation ou d'évacuation d'un échangeur de chaleur remplie d'un fluide de refroidissement (40) en circulation, l'échangeur de chaleur permettant un échange thermique à travers une paroi d'échangeur de chaleur entre un fluide de processus et le fluide de refroidissement (40), la puissance de chauffage de la source de chaleur (7) ou la puissance de refroidissement de la source de froid étant réglée en fonction d'une température de processus du fluide de processus.

**15.** Procédé selon l'une des revendications 11 à 14, **caractérisé en ce qu'**une différence de température entre la première et la deuxième température est déterminée et qu'un additif est introduit dans le récipient de traitement ou dans la conduite de traitement (11) en fonction de la différence de température déterminée.

Fig. 1

Fig. 2

Fig. 3

Fig. 4

$$x_{emul} = d_w * \lambda_s / \lambda_w$$

$$T_1 = T_p / x_{emul} * x_1$$
$$T_2 = T_p / x_{emul} * x_2$$

$$T_s = T_2 - (T_1 - T_2)/(x_2 - x_1)$$

$$P = \lambda_s A_S (T_1 - T_2)/(x_2 - x_1)$$

Fig. 5

**EP 4 526 649 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009009592 A1

- WO 2014099755 A1